# EUROPEAN PATENT APPLICATION

(11) **EP 4 691 228 A1**
(43) Date of publication of application: **11.02.2026**
(21) Application number: 24795943.0
(22) Date of filing: 18.04.2024
(51) Int. Cl.: A01K 1/03

(54) **PET CAGE**

(30) Priority: 26.04.2023 CN 202320969273 U
(71) Applicant: With-U e-Commerce (Shanghai) Co., Ltd., Shanghai 200233 (CN)
(72) Inventor: YUAN, Chunliang, Shanghai 200333 (CN); YANG, Shengyong, Shanghai 200333 (CN)
(74) Representative: De Vries & Metman
(86) International application number: PCT/CN2024/088573
(87) International publication number: WO 2024/222562

(57) **Abstract**

A pet cage, comprising a cage frame having an unfolded state. In the unfolded state, the cage frame comprises: a left side support frame and a right side support frame which are arranged at an interval in the left-right direction; an upper connecting frame, wherein when the pet cage is in the unfolded state, the upper part of the left side support frame and the upper part of the right side support frame are respectively connected to the upper connecting frame; and a bottom frame, wherein the lower part of the left side support frame and the lower part of the right side support frame are rotatably connected to the bottom frame, the bottom frame comprises a bottom rod assembly extending between the left side support frame and the right side support frame, and the bottom rod assembly comprises a plurality of bottom rods which can move relative to one another in the length direction. The pet cage has a small size after being folded, and is convenient to package, transport and store.

## Description

### RELATED APPLICATIONS

The present application claims priority to Chinese Patent Application No. CN 2023209692731 filed on April 26, 2023, the entire content of which is incorporated herein by reference.

### FIELD

The following relates to the field of pet tools, and particular to a pet carrier.

### BACKGROUND

With an improvement of living standards, raising pet at home becomes more and more popular. Various pet carriers have been provided for raising pet conveniently. Most pet carriers have an unfoldable structure, which occupy large spaces when not used, and are extremely inconvenient to carry during traveling. In view of the above problems, some foldable pet carriers were researched. A carrier frame of an existing foldable pet carrier includes an upper connecting frame, a left side support frame, a right side support frame, and a bottom frame, the upper connecting frame includes two detachably-connected upper rods, the left side support frame is rotatably connected to one of the upper rods, the right side support frame is rotatably connected to the other upper rod, and the left side support frame and the right side support frame can be rotatably connected to the bottom frame. Although the pet carrier of this solution can be folded, the pet carrier still has a large size after being folded, and still occupies a large space during transportation or storage, and a packaging size is also large.

### SUMMARY

The present disclosure relates to an improved pet carrier which has a small size after being folded, and is convenient to package, transport and store.

A pet carrier according to the present disclosure includes a carrier frame having an unfolded state, and in the unfolded state, the carrier frame includes:
a left side support frame and a right side support frame which are arranged at an interval in a left-right direction;
an upper connecting frame, when the pet carrier is in the unfolded state, an upper portion of the left side support frame and an upper portion of the right side support frame being respectively connected to the upper connecting frame; and
a bottom frame, a lower portion of the left side support frame and a lower portion of the right side support frame being rotatably connected to the bottom frame,
wherein, the bottom frame includes a bottom rod assembly extending between the left side support frame and the right side support frame, and the bottom rod assembly includes a plurality of bottom rods which can move relative to one another in a length direction.

In an embodiment, the upper connecting frame includes a first upper rod and a second upper rod, a left end portion of the first upper rod is rotatably connected to an upper end portion of the left side support frame, a right end portion of the second upper rod is rotatably connected to an upper end portion of the right side support frame, and a right end portion of the first upper rod is detachably connected to a left end portion of the second upper rod.

In some other embodiments, the right end portion of the first upper rod is rotatably connected to the left end portion of the second upper rod, the left end portion of the first upper rod is rotatably connected to the left side support frame, and the right end portion of the second upper rod is detachably connected to the right side support frame; or the left end portion of the first upper rod is detachably connected to the left side support frame, and the right end portion of the second upper rod is rotatably connected to the right side support frame.

In an embodiment, the bottom rod assembly includes a first bottom rod and a second bottom rod capable of stretching and retracting with respect to each other, and the bottom rod assembly is stretched in the unfolded state; the carrier frame has a first folded state, and the bottom rod assembly is retracted in the first folded state.

In an embodiment, the first bottom rod and the second bottom rod are in sleeved connection, and when the carrier frame is in the unfolded state, the first bottom rod and the second bottom rod are arranged left and right, the carrier frame has a first folded state, and in the first folded state, the first bottom rod is accommodated in the second bottom rod; or, the second bottom rod is accommodated in the first bottom rod.

In an embodiment, a right end portion of the first bottom rod is detachably connected to a left end portion of the second bottom rod.

In an embodiment, when the carrier frame is in the unfolded state, the right end portion of the first bottom rod is detachably connected to the left end portion of the second bottom rod through a connecting mechanism.

In an embodiment, the connecting mechanism comprises a connecting pin, each of the first bottom rod and the second bottom rod is provided with a locking hole, and when the carrier frame is in the unfolded state, the locking hole of the first bottom rod and the locking hole of the second bottom rod are aligned with each other, and the connecting pin is inserted into each locking hole.

In an embodiment, the first bottom rod or the second bottom rod has an inner cavity therein, and the connecting mechanism further comprises an elastic piece for driving the connecting pin to insert into the locking hole, and the elastic piece is arranged in the inner cavity; when the carrier frame is in the first folded state, the elastic piece is in a deformed state, and at least part of the connecting pin is located in the inner cavity.

In an embodiment, the elastic piece includes an elastic sheet, and the connecting pin is fixed on the elastic sheet.

In an embodiment, the elastic sheet includes a first elastic sheet portion abutting against an inner wall of the inner cavity and a bent portion bent from one end of the first elastic sheet portion, and the connecting pin is fixed on the bent portion.

In an embodiment, the carrier frame has a first folded state, and in the first folded state, the first upper rod is separated from the second upper rod, the right end portion of the first upper rod gets close to the left side support frame, the left end portion of the second upper rod gets close to the right side support frame, and the bottom frame is retracted, such that the upper end portion of the left side support frame gets close to a right end portion of the bottom frame, and the upper end portion of the right side support frame gets close to a left end portion of the bottom frame.

In an embodiment, the carrier frame has a second folded state, and in the second folded state, the first upper rod is separated from the second upper rod, the right end portion of the first upper rod gets close to the left side support frame, the left end portion of the second upper rod gets close to the right side support frame, and the bottom frame is maintained in a stretched state.

In an embodiment, the upper connecting frame is located beside the bottom rod in a top view.

In an embodiment, when the carrier frame is in the unfolded state, a carrier cover is spread by the carrier frame and constrains the carrier frame within a predetermined size range.

In the pet carrier according to the present disclosure, the bottom frame including the plurality of bottom rods which can move relative to one another in the length direction is adopted, and during folding, some bottom rods can be accommodated in the other bottom rods, such that after the carrier frame is folded, the left side support frame and the right side support frame are overturned to get close to the bottom frame again, and the whole carrier frame can be folded into a flat state; an overall length of the pet carrier is reduced, the size is smaller after complete folding, and a storage space is saved; a packaging size is small, and transportation can be facilitated.

### BRIEF DESCRIPTION OF THE DRAWINGS

To describe the technical solution of the present application more clearly, the following briefly describes the accompanying drawings required for describing the embodiments. Apparently, the accompanying drawings in the following description show merely some embodiments of the present disclosure, and a person of ordinary skill in the art may still derive other drawings from these accompanying drawings without creative efforts.
FIG. 1 is a perspective view of a pet carrier according to an embodiment of the present disclosure.
FIG. 2 is a perspective view of a carrier frame in an unfolded state in an embodiment of the present disclosure.
FIG. 3 is a partial enlarged view of part A in FIG. 2.
FIG. 4 is a side view of the carrier frame in an embodiment of the present disclosure.
FIG. 5 is a front view of the carrier frame in an embodiment of the present disclosure.
FIG. 6 is a sectional view of the carrier frame in an embodiment of the present disclosure.
FIG. 7 is a partial enlarged view of part B in FIG. 6.
FIG. 8 is another perspective view of the carrier frame in the unfolded state in an embodiment of the present disclosure, wherein a first upper rod is separated from a second upper rod, and a first bottom rod is separated from a second bottom rod.
FIG. 9 is yet another perspective view of the carrier frame in the unfolded state in an embodiment of the present disclosure, wherein the first upper rod is separated from the second upper rod, the first bottom rod is separated from the second bottom rod, and a sliding sleeve slides leftwards.
FIG. 10 is a front view of that shown in FIG. 9.
FIG. 11 is a perspective view of the carrier frame in a folded state in an embodiment of the present disclosure, wherein the first upper rod is separated from the second upper rod, and the first bottom rod is separated from the second bottom rod.
FIG. 12 is a perspective view of the carrier frame in a process from the unfolded state to a first folded state in an embodiment of the present disclosure.
FIG. 13 is a perspective view of the carrier frame in the first folded state in an embodiment of the present disclosure.
FIG. 14 is a perspective view of the carrier frame in a second folded state in an embodiment of the present disclosure.

In the drawings:
100-pet carrier;
1-carrier frame; 11-left side support frame; 12-right side support frame; 13-upper connecting frame; 131-first upper rod; 1311-pipe plug; 1312-sliding sleeve; 132-second upper rod; 14-bottom frame; 141-first bottom rod; 142-second bottom rod; 143-locking hole; 144-inner cavity; 2-connecting pin; 3-elastic sheet; 31-first elastic sheet portion; 32-bent portion; 4-carrier cover; 5-joint; 51-first rod joint; 52-pivot; 53-second rod joint; 6-reset spring.

### DETAILED DESCRIPTION

Preferred embodiments of the present disclosure are described in detail below with reference to the accompanying drawings, such that the advantages and features of the present disclosure can be more readily understood by those skilled in the art. It should be noted here that the description of these embodiments is intended to assist in understanding of the present disclosure, but does not constitute a limitation of the present disclosure. Furthermore, the technical features involved in the embodiments of the present disclosure described below may be combined with each other as long as they do not conflict with each other.

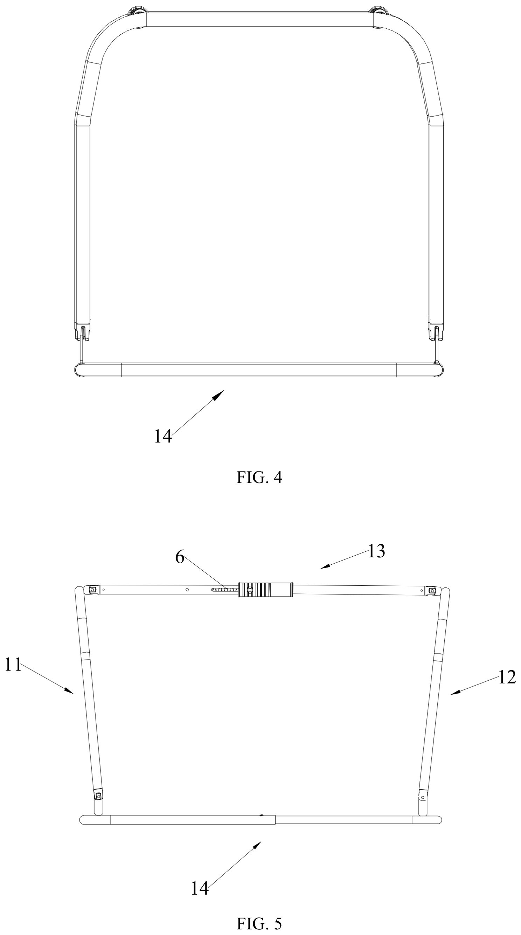

It should be noted that the orientation terms "up", "down", "left", "right", or the like, involved herein are described with reference to positions of components of the carrier frame in the unfolded state; for "up", "down", "left" and "right", reference may be made to the upper, lower, left and right sides of the paper in FIG. 5.

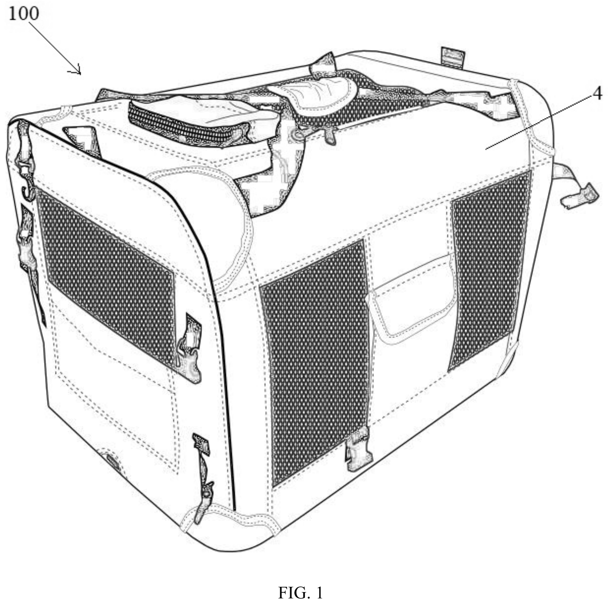

Referring to FIG. 1, the embodiment provides a pet carrier 100, which includes a carrier frame 1 and a carrier cover 4 covering the carrier frame 1. The carrier frame 1 is foldable and has an unfolded state and a folded state, and the carrier cover 4 can be spread with the unfolding of the carrier frame 1 or folded with the folding of the carrier frame 1. The carrier cover 4 is formed by a stitched flexible fabric.

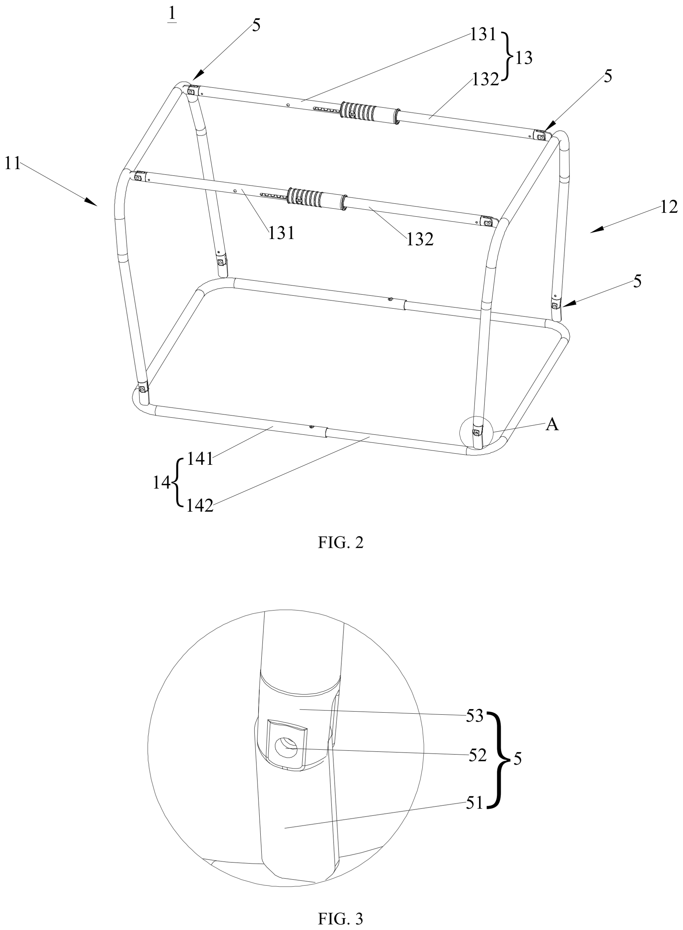

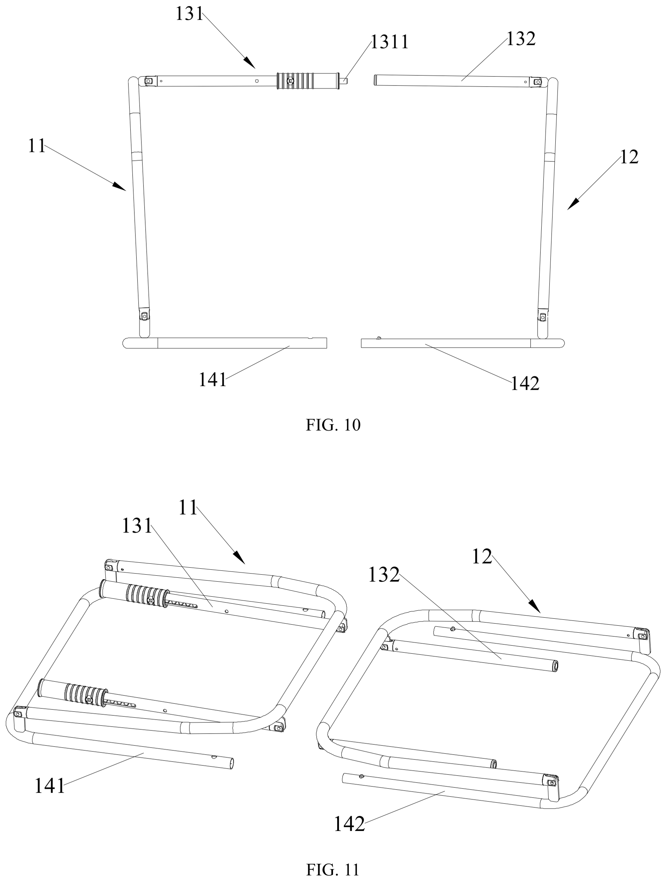

Referring to FIG. 2 to FIG. 14, the carrier frame 1 includes a left side support frame 11, a right side support frame 12, an upper connecting frame 13, and a bottom frame 14.

Further, referring to FIG. 2 and FIG. 3, a lower portion of the left side support frame 11 and a lower portion of the right side support frame 12 are rotatably connected to the bottom frame 14. The bottom frame 14 includes a bottom rod assembly extending between the left side support frame 11 and the right side support frame 12, the bottom rod assembly includes a plurality of bottom rods, and the plurality of bottom rods are movable relative to one another in an axial direction (length direction, i.e., the left-right direction in FIG. 5). The bottom frame 14 can relatively stretch and retract. Specifically, the bottom rod assembly includes a first bottom rod 141 and a second bottom rod 142 which are in sleeved connection to each another. A lower end portion of the left side support frame 11 is rotatably connected to the bottom frame 14 through a joint 5, and a lower end portion of the right side support frame 12 is rotatably connected to the bottom frame 14 through a joint 5. The joint 5 mentioned herein includes a first rod joint 51, a pivot 52 and a second rod joint 53. Specifically, in the joint 5 connected to the bottom frame 4, the first rod joint 51 is fixedly provided at an end portion of the bottom frame 14, the pivot 52 hinges the first rod joint 51 and the second rod joint 53, and the second rod joint 53 is fixedly connected to a bottom end portion of the left side support frame 11 or the right side support frame 12.

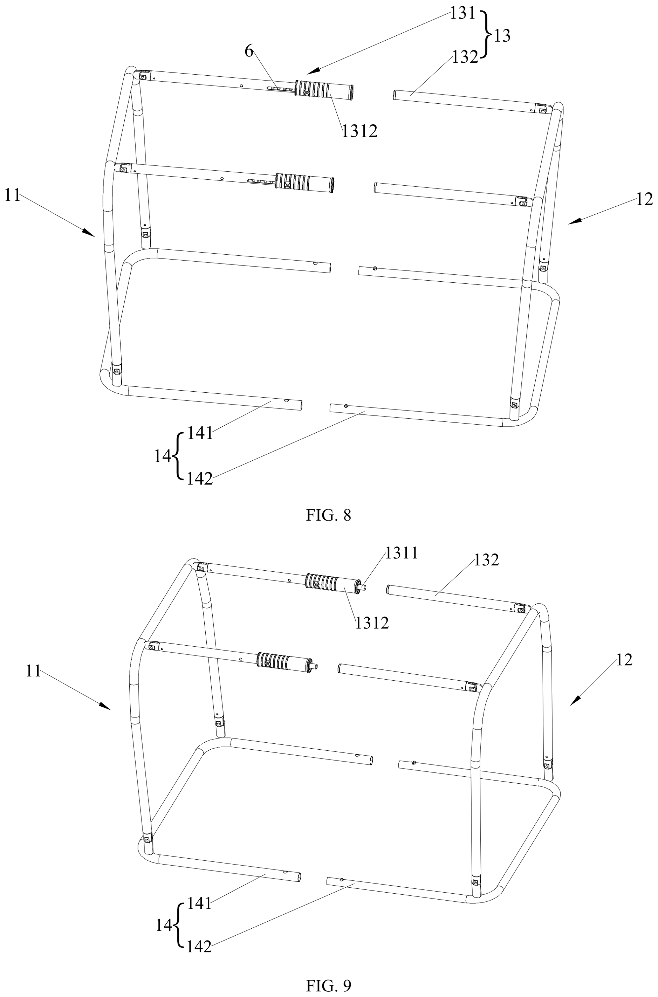

An upper portion of the left side support frame 11 and an upper portion of the right side support frame 12 are rotatably connected to the upper connecting frame 13. Specifically, the upper connecting frame 13 includes a first upper rod 131 and a second upper rod 132, a left end portion of the first upper rod 131 is rotatably connected to an upper end portion of the left side support frame 11 through one or more of the joints 5 described above, a right end portion of the second upper rod 132 is rotatably connected to an upper end portion of the right side support frame 12 through one or more of the joints 5 described above, and a right end portion of the first upper rod 131 is detachably connected to a left end portion of the second upper rod 132. The right end portion of the first upper rod 131 and the left end portion of the second upper rod 132 are detachably connected through a connecting assembly, which is not essential to the present disclosure, and an existing structure may be employed. For example, referring to FIG. 8 to FIG. 10, the connecting assembly includes a pipe plug 1311 arranged on the first upper rod 131, a sliding sleeve 1312 is sleeved on the right end portion of the first upper rod 131, and a reset spring 6 is arranged between the sliding sleeve 1312 and the first upper rod 131. When the sliding sleeve 1312 is slid leftwards, the first upper rod 131 and the second upper rod 132 are overturned downwards, the pipe plug 1311 is separated from the second upper rod 132, and the right end portion of the first upper rod 131 is separated from the left end portion of the second upper rod 132; when the first upper rod 131 and the second upper rod 132 are required to be connected together, the right end portion of the first upper rod 131 and the left end portion of the second upper rod 132 are overturned upwards, and in the overturning process, the pipe plug 1311 is aligned with the second upper rod 132, and the pipe plug 1311 is inserted into the second upper rod 132 by an elastic force of the reset spring 6, such that the first upper rod 131 and the second upper rod 132 are connected. In some other embodiments, the right end portion of the first upper rod 131 is rotatably connected to the left end portion of the second upper rod 132, the left end portion of the first upper rod 131 is rotatably connected to the left side support frame, and the right end portion of the second upper rod 132 is detachably connected to the right side support frame; or the left end portion of the first upper rod 131 is detachably connected to the left side support frame, and the right end portion of the second upper rod 132 is rotatably connected to the right side support frame.

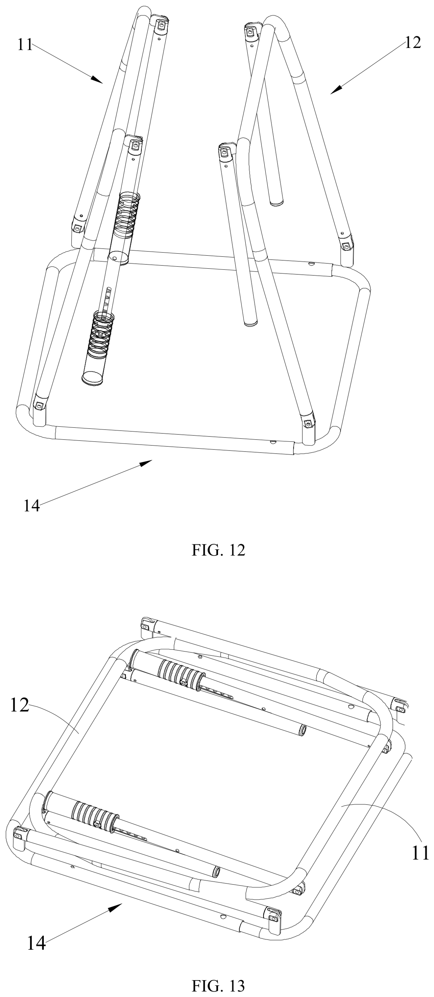

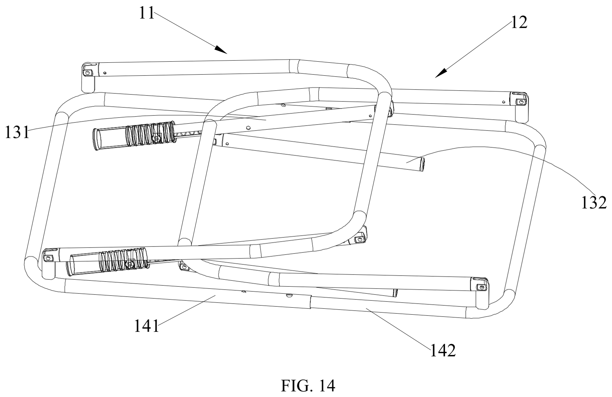

The carrier frame 1 in the embodiment has an unfolded state as shown in FIG. 2, a first folded state as shown in FIG. 13 and a second folded state as shown in FIG. 14.

In the unfolded state, the left side support frame 11 and the right side support frame 12 are arranged at an interval in the left-right direction. The upper connecting frame 13 is located beside the bottom rod assembly in a top view. The first bottom rod 141 and the second bottom rod 142 are arranged left and right, and a right end portion of the first bottom rod 141 and a left end portion of the second bottom rod 142 are detachably connected. Specifically, the bottom frame 4 includes two bottom rod assemblies arranged at an interval in a front-rear direction, each bottom rod assembly including the first bottom rod 141 and the second bottom rod 142; a number of the upper connecting frames 13 is two, the two upper connecting frames 13 are arranged at an interval in the front-rear direction, and a distance between the two upper connecting frames 13 is smaller than a width of the bottom frame 14; that is, the upper connecting frame 13 is located inside the first bottom rod 141/the second bottom rod 142 in a top view. The left side support frame 11 and the right side support frame 12 are symmetrically arranged and are approximately in an inverted U shape or half-loop shape (with a downward opening); the left side support frame 11 and the right side support frame 12 are slightly inclined, and a distance between the upper end portions of the two support frames is larger than that between the lower end portions of the two support frames. In the unfolded state, a length, a width, or the like, of the carrier frame 1 are restricted by the carrier cover 4 and maintained within predetermined size ranges.

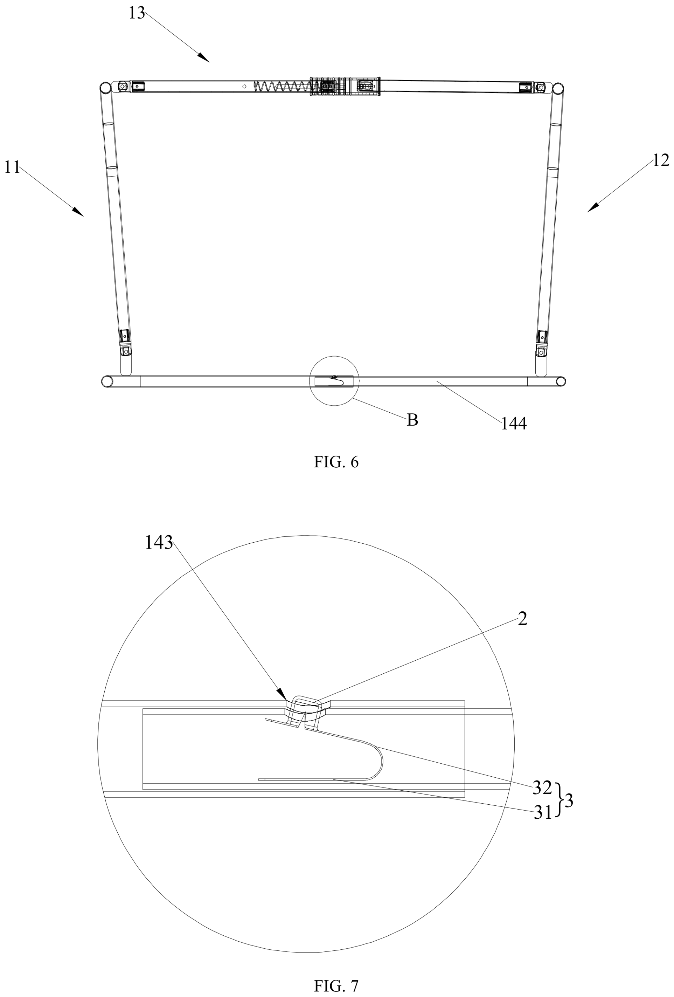

Specifically, referring to FIG. 6 and FIG. 7, the right end portion of the first bottom rod 141 is detachably connected to the left end portion of the second bottom rod 142 by a connecting mechanism. In an embodiment, the connecting mechanism includes a connecting pin 2 and an elastic piece, each of the first bottom rod 141 and the second bottom rod 142 is provided with a locking hole 143, and the elastic piece is configured to drive the connecting pin 2 to insert into the locking holes 143. The locking hole 143 of the first bottom rod 141 and the locking hole 143 of the second bottom rod 142 are aligned with each other when the carrier frame 1 is in the unfolded state, and the connecting pin 2 is inserted into each locking hole 143. The first bottom rod 141 or the second bottom rod 142 has an inner cavity 144 therein, and the elastic piece is provided in the inner cavity 144. In an embodiment, the elastic piece includes an elastic sheet 3, and the connecting pin 2 is fixed on the elastic sheet 3. The elastic sheet 3 includes a first elastic sheet portion 31 abutting against an inner wall of the inner cavity 144 and a bent portion 32 bent from one end portion of the first elastic sheet portion 31, and the connecting pin 2 is fixed on the bent portion 32. A length direction of the connecting pin 2 is vertical or obliquely intersected with the horizontal plane.

Referring to FIG. 13 and FIG. 14, in the first folded state, the first upper rod 131 and the second upper rod 132 are separated, the right end portion of the first upper rod 131 and the left side support frame 11 get close, the left end portion of the second upper rod 132 and the right side support frame 12 get close, and the bottom frame 14 retracts (the second bottom rod 142 is accommodated in the first bottom rod 141), such that the upper end portion of the left side support frame 11 and a right end portion of the bottom frame get close, the upper end portion of the right side support frame 12 and a left end portion of the bottom frame get close, the elastic piece is in a deformed state, and at least part of the connecting pin 2 is located in the inner cavity 144; in the second folded state, the first upper rod 131 and the second upper rod 132 are separated, the right end portion of the first upper rod 131 and the left side support frame 11 get close, the left end portion of the second upper rod 132 and the right side support frame 12 get close, and the bottom frame 14 is maintained in an stretched state.

When the pet carrier according to the embodiment is folded from the unfolded state, the sliding sleeve 1312 is slid leftwards to separate the first upper rod 131 and the second upper rod 132, the right end portion of the first upper rod 131 is then rotated towards the left side support frame 11, the left end portion of the second upper rod 132 is rotated towards the right side support frame 12, the upper end portion of the left side support frame 11 and the right end portion of the bottom rod assembly then get close, and the upper end portion of the right side support frame 12 and the left end portion of the bottom rod assembly get close, such that the carrier frame 1 is in the second folded state; the connecting pin 2 is further pressed downwards to make the second bottom rod 142 accommodated in the first bottom rod 141; that is, the bottom frame 14 is retracted, such that the carrier frame 1 is in the first folded state, and at this point, the folded carrier frame has a smaller size and is convenient to carry.

When the pet carrier 100 is packaged, the first bottom rod 141 and the second bottom rod 142 can be completely separated to further reduce a packaging size.

Features of embodiments of the present disclosure are set forth in the following aspects:
Aspect 1. A pet carrier, including a carrier frame having an unfolded state, in the unfolded state, the carrier frame including:
   a left side support frame and a right side support frame which are arranged at an interval in a left-right direction;
   an upper connecting frame, when the pet carrier is in the unfolded state, an upper portion of the left side support frame and an upper portion of the right side support frame being respectively connected to the upper connecting frame; and
   a bottom frame, a lower portion of the left side support frame and a lower portion of the right side support frame being rotatably connected to the bottom frame,
   wherein, the bottom frame includes a bottom rod assembly extending between the left side support frame and the right side support frame, and the bottom rod assembly includes a plurality of bottom rods capable of moving relative to one another in an length direction.
Aspect 2. The pet carrier according to aspect 1, wherein the upper connecting frame includes a first upper rod and a second upper rod, a left end portion of the first upper rod is rotatably connected to an upper end portion of the left side support frame, a right end portion of the second upper rod is rotatably connected to an upper end portion of the right side support frame, and a right end portion of the first upper rod is detachably connected to a left end portion of the second upper rod.
Aspect 3. The pet carrier according to aspect 1 or 2, wherein the bottom frame includes a first bottom rod and a second bottom rod in sleeved connection to each other, and when the carrier frame is in the unfolded state, the first bottom rod and the second bottom rod are arranged left and right, the carrier frame has a first folded state, and in the first folded state, the first bottom rod is accommodated in the second bottom rod; or, the second bottom rod is accommodated in the first bottom rod.
Aspect 4. The pet carrier according to aspect 3, wherein a right end portion of the first bottom rod is detachably connected to a left end portion of the second bottom rod.
Aspect 5. The pet carrier according to aspect 4, wherein when the carrier frame is in the unfolded state, the right end portion of the first bottom rod is detachably connected to the left end portion of the second bottom rod through a connecting mechanism.
Aspect 6. The pet carrier according to aspect 5, wherein the connecting mechanism includes a connecting pin, each of the first bottom rod and the second bottom rod is provided with a locking hole, and when the carrier frame is in the unfolded state, the locking hole of the first bottom rod and the locking hole of the second bottom rod are aligned with each other, and the connecting pin is inserted into each locking holes.
Aspect 7. The pet carrier according to aspect 6, wherein the first bottom rod or the second bottom rod has an inner cavity therein, and the connecting mechanism further includes an elastic piece for driving the connecting pin to insert into the locking hole, and the elastic piece is arranged in the inner cavity; when the carrier frame is in the first folded state, the elastic piece is in a deformed state, and at least part of the connecting pin is located in the inner cavity.
Aspect 8. The pet carrier according to aspect 7, wherein the elastic piece includes an elastic sheet, and the connecting pin is fixed on the elastic sheet.
Aspect 9. The pet carrier according to aspect 8, wherein the elastic sheet includes a first elastic sheet portion abutting against an inner wall of the inner cavity and a bent portion bent from one end of the first elastic sheet portion, and the connecting pin is fixed on the bent portion.
Aspect 10. The pet carrier according to aspect 2, wherein the carrier frame has a first folded state, and in the first folded state, the first upper rod is separated from the second upper rod, the right end portion of the first upper rod gets close to the left side support frame, the left end portion of the second upper rod gets close to the right side support frame, and the bottom frame is retracted, such that the upper end portion of the left side support frame gets close to a right end portion of the bottom frame, and the upper end portion of the right side support frame gets close to a left end portion of the bottom frame.
Aspect 11. The pet carrier according to aspect 11, wherein the carrier frame has a second folded state, and in the second folded state, the first upper rod is separated from the second upper rod, the right end portion of the first upper rod gets close to the left side support frame, the left end portion of the second upper rod gets close to the right side support frame, and the bottom frame is maintained in an stretched state.
Aspect 12. The pet carrier according to aspect 1, wherein the upper connecting frame is located beside the bottom rod in a top view.
Aspect 13. The pet carrier according to aspect 1, wherein the upper connecting frame includes a first upper rod and a second upper rod, a right end portion of the first upper rod is rotatably connected to a left end portion of the second upper rod, a left end portion of the first upper rod is rotatably connected to the left side support frame, and a right end portion of the second upper rod is detachably connected to the right side support frame; or the left end portion of the first upper rod is detachably connected to the left side support frame, and the right end portion of the second upper rod is rotatably connected to the right side support frame.

As used in the specification and the appended claims, the terms "includes" and "comprises" only suggest the inclusion of the explicitly recited steps and elements, these steps and elements do not constitute an exclusive list, and the method or device may include other steps or elements. The term "and/or" used herein includes any combination of one or more related listed items.

The indefinite articles "a" and "an" preceding an element or component herein are intended to describe without limitation the number of instances (i.e., occurrences) of the element or component, unless the context clearly indicates. Therefore, "a" and "an" are to be understood as including one or at least one, and the singular form of the element or component also includes the plural form.

It should be noted that, unless otherwise specified, when a feature is referred to as being "fixed" or "connected" to another feature, it can be directly or indirectly fixed or connected to the other feature. Furthermore, the descriptions "upper", "lower", "left", "right", or the like, used in the present invention are only given with respect to the positional relationship of the components of the present invention in the drawings.

It will be further understood that the terms "first", "second", or the like, are used to describe various information, but the information should not be limited by these terms. These terms are only used to distinguish information of the same type, and do not indicate a particular order or degree of importance. Indeed, the expressions "first", "second", or the like, are used interchangeably throughout. For example, first information may also be referred to as second information, and similarly, second information may also be referred to as first information, without departing from the scope of the present disclosure.

The above-mentioned embodiments are merely illustrative of the technical concepts and features of the present invention, and are preferred embodiments, which are intended to enable those skilled in the art to understand the contents of the present invention and implement the present invention, and not to limit the protection scope of the present invention.

## Claims

1. A pet carrier, comprising a carrier frame having an unfolded state, in the unfolded state, the carrier frame comprising:
a left side support frame and a right side support frame which are arranged at an interval in a left-right direction;
an upper connecting frame, when the pet carrier is in the unfolded state, an upper portion of the left side support frame and an upper portion of the right side support frame being respectively connected to the upper connecting frame; and
a bottom frame, a lower portion of the left side support frame and a lower portion of the right side support frame being rotatably connected to the bottom frame,
wherein, the bottom frame comprises a bottom rod assembly extending between the left side support frame and the right side support frame, and the bottom rod assembly comprises a plurality of bottom rods which is capable of moving relative to one another in a length direction.

2. The pet carrier according to claim 1, wherein the upper connecting frame comprises a first upper rod and a second upper rod, a left end portion of the first upper rod is rotatably connected to an upper end portion of the left side support frame, a right end portion of the second upper rod is rotatably connected to an upper end portion of the right side support frame, and a right end portion of the first upper rod is detachably connected to a left end portion of the second upper rod.

3. The pet carrier according to claim 1 or 2, wherein the bottom rod assembly comprises a first bottom rod and a second bottom rod capable of stretching and retracting with respect to each other, and the bottom rod assembly is stretched in the unfolded state; the carrier frame has a first folded state, and the bottom rod assembly is retracted in the first folded state.

4. The pet carrier according to claim 3, wherein the first bottom rod and the second bottom rod are in sleeved connection, and when the carrier frame is in the unfolded state, the first bottom rod and the second bottom rod are arranged left and right, the carrier frame has a first folded state, and in the first folded state, the first bottom rod is accommodated in the second bottom rod; or, the second bottom rod is accommodated in the first bottom rod.

5. The pet carrier according to claim 4, wherein a right end portion of the first bottom rod is detachably connected to a left end portion of the second bottom rod.

6. The pet carrier according to claim 5, wherein when the carrier frame is in the unfolded state, the right end portion of the first bottom rod is detachably connected to the left end portion of the second bottom rod through a connecting mechanism.

7. The pet carrier according to claim 6, wherein the connecting mechanism comprises a connecting pin, each of the first bottom rod and the second bottom rod is provided with a locking hole, and when the carrier frame is in the unfolded state, the locking hole of the first bottom rod and the locking hole of the second bottom rod are aligned with each other, and the connecting pin is inserted into each locking hole.

8. The pet carrier according to claim 7, wherein the first bottom rod or the second bottom rod has an inner cavity therein, and the connecting mechanism further comprises an elastic piece for driving the connecting pin to insert into the locking hole, and the elastic piece is arranged in the inner cavity; when the carrier frame is in the first folded state, the elastic piece is in a deformed state, and at least part of the connecting pin is located in the inner cavity.

9. The pet carrier according to claim 8, wherein the elastic piece comprises an elastic sheet, and the connecting pin is fixed on the elastic sheet.

10. The pet carrier according to claim 9, wherein the elastic sheet comprises a first elastic sheet portion abutting against an inner wall of the inner cavity and a bent portion bent from one end of the first elastic sheet portion, and the connecting pin is fixed on the bent portion.

11. The pet carrier according to any one of claims 2 to 10, wherein the carrier frame has a first folded state, and in the first folded state, the first upper rod is separated from the second upper rod, the right end portion of the first upper rod gets close to the left side support frame, the left end portion of the second upper rod gets close to the right side support frame, and the bottom frame is retracted, such that the upper end portion of the left side support frame gets close to a right end portion of the bottom frame, and the upper end portion of the right side support frame gets close to a left end portion of the bottom frame.

12. The pet carrier according to claim 11, wherein the carrier frame has a second folded state, and in the second folded state, the first upper rod is separated from the second upper rod, the right end portion of the first upper rod gets close to the left side support frame, the left end portion of the second upper rod gets close to the right side support frame, and the bottom frame is maintained in a stretched state.

13. The pet carrier according to any one of claims 1 to 12, wherein the upper connecting frame is located beside the bottom rods in a top view.

14. The pet carrier according to any one of claims 1 to 13, wherein the upper connecting frame comprises a first upper rod and a second upper rod, a right end portion of the first upper rod is rotatably connected to a left end portion of the second upper rod, a left end portion of the first upper rod is rotatably connected to the left side support frame, and a right end portion of the second upper rod is detachably connected to the right side support frame; or the left end portion of the first upper rod is detachably connected to the left side support frame, and the right end portion of the second upper rod is rotatably connected to the right side support frame.

15. The pet carrier according to any one of claims 1 to 13, wherein the upper connecting frame comprises a first upper rod and a second upper rod, a left end portion of the first upper rod is rotatably connected to an upper end portion of the left side support frame, a right end portion of the second upper rod is rotatably connected to an upper end portion of the right side support frame, and a right end portion of the first upper rod is detachably connected to a left end portion of the second upper rod.

16. The pet carrier according to any one of preceding claims, wherein when the carrier frame is in the unfolded state, a carrier cover is spread by the carrier frame and constrains the carrier frame within a predetermined size range.
